# EUROPEAN PATENT SPECIFICATION

(11) **EP 3 615 391 B1**
(45) Date of publication and mention of the grant of the patent: **02.06.2021**
(21) Application number: 18719570.6
(22) Date of filing: 24.04.2018
(51) Int. Cl.: B08B 3/02, B60S 1/48, B60S 1/50, B60S 1/56

(54) **CLEANING DEVICE FOR VEHICLES, AND METHOD FOR CLEANING SURFACES ON VEHICLES**
REINIGUNGSVORRICHTUNG FÜR FAHRZEUGE UND VERFAHREN ZUR REINIGUNG VON OBERFLÄCHEN AUF FAHRZEUGEN
DISPOSITIF DE NETTOYAGE POUR VÉHICULES ET PROCÉDÉ DE NETTOYAGE DE SURFACES SUR DES VÉHICULES

(30) Priority: 26.04.2017 DE 102017108901
(43) Date of publication of application: 04.03.2020
(73) Proprietor: Valeo Wischersysteme GmbH, 74321 Bietigheim-Bissingen (DE)
(72) Inventor: WAIBLE, Siegfried, 74321 Bietigheim-Bissingen (DE)
(74) Representative: Valeo Visibility
(86) International application number: PCT/EP2018/060450
(87) International publication number: WO 2018/197474

(56) References cited:
- EP-A1- 2 815 936
- DE-U1- 20 021 641

## Description

The invention relates to a cleaning device for vehicles, and to a method for cleaning surfaces on vehicles according to the preambles of the two independent claims.

A cleaning device and a method for cleaning surfaces on vehicles with a number of the features of the preamble of the independent claim are known from DE 10 2014 200 097 A1. In the case of the known cleaning device and the known method for cleaning surfaces on vehicles, it is provided that cleaning fluid can be supplied by means of at least one feed pump, preferably by means of a plurality of feed pumps, both to spray nozzles on vehicle screens and also to spray nozzles which serve for cleaning sensor surfaces. For this purpose, a branching element is arranged in the region of a supply line which connects the at least one feed pump to a plurality of spray nozzles, said branching element being in the form of a valve device, via which the cleaning fluid can be supplied as needed to different surfaces to be cleaned (vehicle screen, sensor surface) or to spray nozzles. A disadvantage of the cleaning device known from the document mentioned and of the known method for cleaning surfaces on vehicles is that, when a plurality of feed pumps are used, the outlay in terms of design is relatively high and a relatively large amount of space is required and such a cleaning device has high costs. Furthermore, the full pressure of the cleaning fluid in the region of the spray nozzle is always applied only with a certain time delay since the pressure first of all has to be built up by the feed pump. EP 2 815 936 A1 discloses the preamble of claim 1.

### Disclosure of the invention

The cleaning device according to the invention for vehicles and the method according to the invention for cleaning surfaces on vehicles with the features of the two independent claims has the advantage that a cleaning device is made possible which requires a relatively low outlay in terms of apparatus and which furthermore permits particularly effective and rapid cleaning of surfaces.

The invention is based on the concept of using a single feed pump to feed the cleaning fluid from the reservoir into a buffer reservoir, in which the cleaning fluid is temporarily stored at a relatively high pressure. Supply lines to the individual use points or to the surfaces to be cleaned lead out from the buffer reservoir, wherein valve devices are inserted in the supply lines and control the inflow of the cleaning fluid to the spray devices at the surfaces to be cleaned.

By the cleaning fluid being stored in the buffer reservoir under a relatively high pressure, after appropriate activation of the valve devices the corresponding pressure is directly applied, i.e. without a time delay, in the region of the spray device since the pressure does not have to be built up first by the feed pump. Furthermore, a decoupling of the operation of the feed pump respectively the cleaning of the surfaces from the operation of the feed pump can take place, since the spray devices, even without the feed pump having to be operated, can be supplied with the cleaning fluid from the buffer reservoir at least for a certain time.

In particular, the use of a buffer reservoir provided according to the invention makes it possible to supply a multiplicity of different consumers or different surfaces to be cleaned with the cleaning fluid with little outlay, and, furthermore, the advantage is achieved that greater flexibility in respect of siting the reservoir for the cleaning fluid can be achieved by the buffer reservoir since the reservoir and the feed pump interacting with the reservoir can be positioned, for example, at a location arranged relatively far from the individual consumers. Of advantage in respect of the buffer reservoir is simply an installation site which, with respect to the surfaces to be cleaned or the arrangement of the spray devices, is at a relatively small distance therefrom.

Advantageous developments of the cleaning device according to the invention for vehicles and of the method for cleaning surfaces on vehicles are cited in the respective dependent claims. All combinations of at least two of the features disclosed in the claims, the description and/or the figures fall within the scope of the invention.

In a particularly preferred structural refinement of the cleaning device, it is provided that a pressure increasing device which is separate from the at least one feed pump is associated with the buffer reservoir and is configured in order to pressurize the cleaning fluid in the buffer reservoir. Such a separate pressure increasing device can be present, for example, in the form of a mechanical element, for example a pretensioned spring, which hydraulically pressurizes the cleaning fluid in the buffer reservoir via a suitable, in particular piston-like arrangement. However, it can also be provided that the pressure increasing device is formed in the form of a pressure chamber which is separate from the buffer reservoir, or else is configured as part of the buffer reservoir and is pneumatically or hydraulically over-pressurized and thereby likewise exerts a hydraulic pressure on the buffer reservoir or on the cleaning fluid in the buffer reservoir.

The cleaning device described to this extent is therefore particularly advantageous since supply of the spray devices with cleaning fluid is made possible even if the feed pump itself is not active at least for a certain period of time. Furthermore, by appropriate configuration of the separate pressure increasing device, the latter is capable of keeping the hydraulic cleaning fluid pressure prevailing in the buffer reservoir at a constant level even when cleaning fluid is extracted through the spray nozzles.

The higher the hydraulic pressure of the cleaning fluid or of the cleaning fluid to be sprayed onto the surface to be cleaned is, the better is the cleaning action since, as a result, improved dissolution or breaking away of dirt particles can be achieved by the cleaning fluid. This requires that the buffer reservoir firstly has to be configured for maintaining the desired pressure of the cleaning fluid and secondly should also be configured to interact with the intended pressure increasing device which in particular has a piston which defines the volume for the cleaning fluid in the buffer reservoir. In view of these statements, it is provided, in a further advantageous refinement of the cleaning device, that the buffer reservoir has a rigid outer wall, and that a movably guided piston is disposed in the interior of the buffer reservoir, defining a storage chamber for the cleaning fluid on a front side of the piston.

In a structural development of the last-mentioned proposal, it is provided that on the side facing away from the storage chamber, the piston is urged in the direction of the storage chamber by means of hydraulic or pneumatic pressure or by means of mechanical resilient force.

In order to permit appropriate activation of the feed pump in such a manner that a certain minimum pressure of the cleaning fluid is always present in the buffer reservoir, it is furthermore provided, in a further advantageous refinement, that pressure measurement means are provided for at least indirect measurement of the hydraulic pressure of the cleaning fluid in the buffer reservoir, and that the at least one feed pump is configured in a manner such that when the pressure of the cleaning fluid falls below a minimum, the pressure of the cleaning fluid is raised by feeding cleaning fluid from the reservoir into the buffer reservoir.

Particularly rapid and simple activation of the valve devices is made possible if the latter are configured as electromagnetically actuatable valve devices. Furthermore, it can be advantageous to arrange said valve devices as close as possible to, i.e. at a small distance from, the spray devices, or optionally to configure the valve device together with the spray device as a common constructional unit.

The cleaning device according to the invention described to this extent is furthermore suitable, in addition to the cleaning of vehicle screens, for cleaning other surfaces to be cleaned, for example headlights, or else sensor surfaces of driver assistance systems.

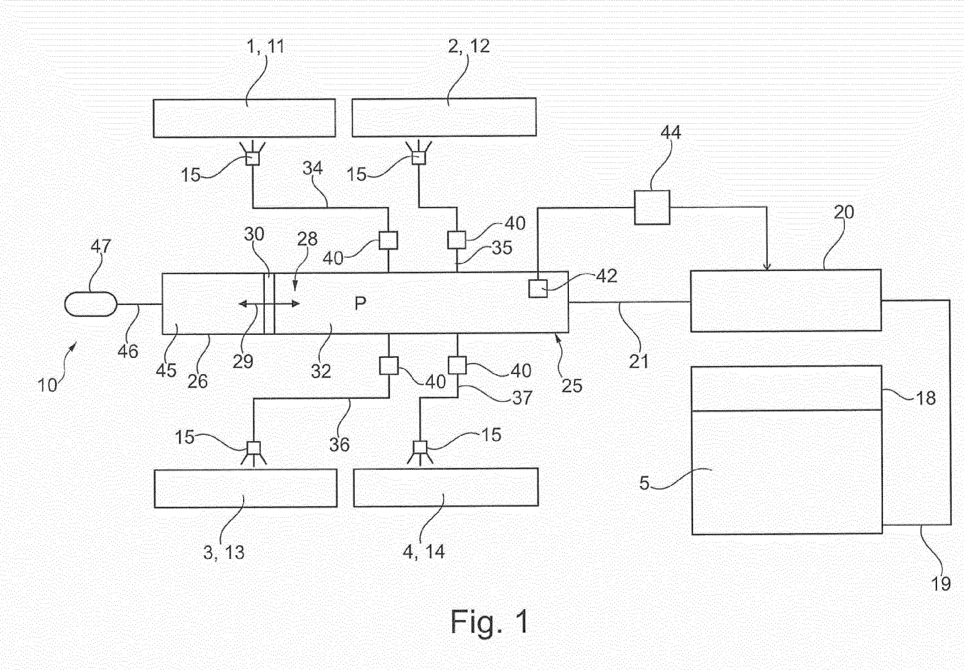

Further advantages, features and details of the invention emerge from the description below of preferred exemplary embodiments and with reference to the drawing.

The latter shows, in the single figure, a simplified schematic illustration of a cleaning device according to the invention for cleaning different surfaces on a vehicle.

The cleaning device 10, which is illustrated in the figure, for vehicles, in particular for road vehicles, serves for cleaning surfaces 1 to 4 of the vehicle by means of a cleaning fluid 5 which preferably comprises at least water. By way of example, and not in a restricting manner, the surface 1 is the surface 1 of a vehicle screen 11, the surface 2 is the surface 2 of a front headlight 12, the surface 3 is the surface 3 of a reversing camera 13 of a driver assistance system, and the surface 4 is a further camera 14, for example a camera 14 arranged in a rear view mirror or a camera 14 arranged at the front of the vehicle.

In addition, it is pointed out that additional use points or else different use points than those described and which are intended to be cleaned with the cleaning fluid 5 by means of the cleaning device 10 can be provided. The cleaning fluid 5 is applied to the respective surface 1 to 4 in particular, but not in a restricting manner, by means of spray devices 15 which are known per se.

The cleaning device 10 comprises a reservoir 18 for the cleaning fluid 5. The reservoir 18 is connected to the suction side of a high pressure pump 20 via a suction line 19. The high pressure side of the high pressure pump 20 is connected via a pressure line 21 to a buffer reservoir 25 which, for example, is tubular and into which the high pressure pump 20 feeds the cleaning fluid 5, thereby increasing the pressure. The buffer reservoir 25 preferably has a cylindrical cross section with an outer wall 26 which is configured rigidly. Preferably, but not in a restricting manner, the buffer reservoir 25 can be composed, for example, of aluminium or an aluminium alloy, or else of stainless steel or another suitable material.

The interior 28 of the buffer reservoir 25 is divided by a piston 30 arranged in a longitudinally displaceable manner in the direction of the double arrow 29 in the interior 28. The piston 30 bears in a sealing manner against the inner wall of the buffer reservoir 25. Within the interior 28, the piston 30 defines a storage chamber 32 for the cleaning fluid 5, which storage chamber is hydraulically connected to the pressure side of the high pressure pump 30 via the pressure line 21. A supply line 34 to 37, by way of example for each surface 1 to 4 to be cleaned, leads off from the storage chamber 32 and is connected to the respective spray device 15 with the interconnection of an electromagnetically actuatable valve 40. According to the driver's requirements, the valve 40 is activated by actuation of a corresponding switch or optionally fully automatically in order to permit the inflow of cleaning fluid 5 from the buffer reservoir 25 to the spray device 15 assigned to the surface 1 to 4.

The cleaning fluid 5 is stored in the storage chamber 32 at a defined minimum pressure Pₘᵢₙ of, for example, 3 bar, preferably more than 3 bar. The hydraulic pressure P of the cleaning fluid 5 in the storage chamber 32 is measured at least indirectly by means of a pressure sensor 42. The output signal from the pressure sensor 42 is supplied to a control device 44 as an input variable which activates the high pressure pump 20 when the pressure falls below the minimum pressure Pₘᵢₙ, and therefore the hydraulic pressure P of the cleaning fluid 5 in the storage chamber 32 is raised, specifically at least to the minimum pressure Pₘᵢₙ, preferably by a defined amount higher than the minimum pressure Pₘᵢₙ.

In order, when cleaning fluid 5 is extracted from the storage chamber 32 of the buffer reservoir 25, always to ensure a desired minimum pressure Pₘᵢₙ even without actuation of the high pressure pump 20, the interior 28 of the buffer reservoir 25 on that side of the piston 30 which faces away from the storage chamber 32 forms a pressure chamber 45 which forms a pressure increasing device. The pressure chamber 45 can be configured as a closed pressure chamber 45 and can be filled with a gas which is under positive pressure, for example with nitrogen. Alternatively, the pressure chamber 45 can be connected to a high pressure reservoir 47, for example via a supply line 46. The high pressure reservoir 47 is, for example, a compressor or a hydraulic pump which is configured to act upon the pressure chamber 45 with a corresponding hydraulic or pneumatic pressure in such a manner that the piston 30 is urged in the direction of the storage chamber 32.

Alternatively in turn, it can also be provided that a mechanical compression spring is arranged within the pressure chamber 45 and is supported within the buffer reservoir 25 and acts upon the piston 30 with a mechanical resilient force likewise in the direction of the storage chamber 32.

The cleaning device 10 described to this extent can be modified in diverse ways without departing from the invention as defined by the claims.

### Reference signs

- 1: surface
- 2: surface
- 3: surface
- 4: surface
- 5: cleaning fluid
- 10: cleaning device
- 11: vehicle screen
- 12: front headlight
- 13: reversing camera
- 14: camera
- 15: spray device
- 18: reservoir
- 19: suction line
- 20: high pressure pump
- 21: pressure line
- 25: buffer reservoir
- 26: outer wall
- 28: interior
- 29: double arrow
- 30: piston
- 32: storage chamber
- 34: supply line
- 35: supply line
- 36: supply line
- 37: supply line
- 40: valve
- 42: pressure sensor
- 44: control device
- 45: pressure chamber
- 46: supply line
- 47: high pressure reservoir
- P: pressure
- Pₘᵢₙ: minimum pressure

## Claims

1. A cleaning device (10) for vehicles, having a reservoir (18) for storing a cleaning fluid (5), having at least one feed pump (20) to feed the cleaning fluid (5) from the reservoir (18), having a plurality of spray devices (15) for applying the cleaning fluid (5) to surfaces (1 to 4) to be cleaned, and having valve devices (40) disposed in supply lines (34 to 37) for the spray devices (15) in order to control the flow of the cleaning fluid (5) to the spray devices (15), a buffer reservoir (25) being provided for the cleaning fluid (5) which is hydraulically connected to the high pressure side of the at least one feed pump (20), the cleaning fluid (5) being stored in the buffer reservoir (25) under hydraulic pressure (P), and the supply lines (34 to 37) for the spray devices (15) leading out from the buffer reservoir (25)
**characterized in that**
the buffer reservoir (25) has a rigid outer wall (26), and **in that** a movably guided piston (30) is disposed in the interior (28) of the buffer reservoir (25), defining a storage chamber (32) for the cleaning fluid (5) with a front side of the piston (30).

2. The cleaning device as claimed in claim 1,
**characterized in that**
a pressure increasing device (45) which is separate from the at least one feed pump (20) is associated with the buffer reservoir (25) and is configured in order to pressurize cleaning fluid (5) in the buffer reservoir (25).

3. The cleaning device as claimed in claim 1 or 2,
**characterized in that**
on the side facing away from the storage chamber (32), the piston (30) is urged in the direction of the storage chamber (32) by means of hydraulic or pneumatic pressure or by means of mechanical resilient force.

4. The cleaning device as claimed in one of claims 1 to 3,
**characterized in that**
pressure measurement means (42) are provided for at least indirect measurement of the hydraulic pressure (P) of the cleaning fluid (5) in the buffer reservoir (25), and **in that** the at least one feed pump (20) is configured in a manner such that when the pressure falls below a minimum (Pₘᵢₙ), the pressure (P) is raised above the minimum pressure (Pₘᵢₙ) by feeding cleaning fluid (5) from the reservoir (18) into the buffer reservoir (25).

5. The cleaning device as claimed in one of claims 1 to 4,
**characterized in that**
the valve devices (40) are configured as electromagnetically actuatable valve devices (40).

6. The cleaning device as claimed in one of claims 1 to 5,
**characterized in that**
in addition to at least one vehicle screen (11), the surfaces (1 to 4) to be cleaned comprise at least one lighting system (12) to be cleaned and/or an element (13, 14) of a driver assistance system to be cleaned.

## Patentansprüche

1. Reinigungseinrichtung (10) für Fahrzeuge, mit einem Vorratsbehälter (18) zur Speicherung eines Reinigungsfluids (5), mit wenigstens einer Förderpumpe (20) zur Förderung des Reinigungsfluids (5) aus dem Vorratsbehälter (18), mit mehreren Sprüheinrichtungen (15) zum Aufbringen des Reinigungsfluids (5) auf zu reinigende Oberflächen (1 bis 4) und mit in Versorgungsleitungen (34 bis 37) für die Sprüheinrichtungen (15) angeordneten Ventileinrichtungen (40) zum Steuern des Durchflusses des Reinigungsfluids (5) zu den Sprüheinrichtungen (15), wobei ein Zwischenspeicher (25) für das Reinigungsfluid (5) vorgesehen ist, der mit der Hochdruckseite der wenigstens einen Förderpumpe (20) hydraulisch verbunden ist, wobei in dem Zwischenspeicher (25) das Reinigungsfluid (5) unter hydraulischem Druck (P) gespeichert ist, und wobei von dem Zwischenspeicher (25) die Versorgungsleitungen (34 bis 37) für die Sprüheinrichtungen (15) abgehen,
**dadurch gekennzeichnet,**
**dass** der Zwischenspeicher (25) eine starre Außenwand (26) aufweist, und dass in dem Innenraum (28) des Zwischenspeichers (25) ein beweglich geführter Kolben (30) angeordnet ist, wodurch ein Speicherraum (32) für das Reinigungsfluid (5) mit einer Stirnseite des Kolbens (30) definiert wird.

2. Reinigungseinrichtung nach Anspruch 1,
**dadurch gekennzeichnet,**
**dass** dem Zwischenspeicher (25) eine von der wenigstens einen Förderpumpe (20) separate Druckerhöhungseinrichtung (45) zugeordnet ist, die dazu ausgebildet ist, das in dem Zwischenspeicher (25) befindliche Reinigungsfluid (5) mit Druck zu beaufschlagen.

3. Reinigungseinrichtung nach Anspruch 1 oder 2,
**dadurch gekennzeichnet,**
**dass** der Kolben (30) auf der dem Speicherraum (32) abgewandten Seite mit hydraulischem oder pneumatischem Druck, oder durch mechanische Federkraft in Richtung des Speicherraums (32) kraftbeaufschlagt ist.

4. Reinigungseinrichtung nach einem der Ansprüche 1 bis 3,
**dadurch gekennzeichnet,**
**dass** Druckerfassungsmittel (42) zur zumindest mittelbaren Erfassung des hydraulischen Drucks (P) des Reinigungsfluids (5) in dem Zwischenspeicher (25) vorgesehen sind, und dass die wenigstens eine Förderpumpe (20) dazu ausgebildet ist, bei Unterschreitung eines Mindestdrucks (Pₘᵢₙ) durch Förderung von Reinigungsfluid (5) aus dem Vorratsbehälter (18) in den Zwischenspeicher (25) den Druck (P) über den Mindestdruck (Pₘᵢₙ) zu erhöhen.

5. Reinigungseinrichtung nach einem der Ansprüche 1 bis 4,
**dadurch gekennzeichnet,**
**dass** die Ventileinrichtungen (40) als elektromagnetisch betätigbare Ventileinrichtungen (40) ausgebildet sind.

6. Reinigungseinrichtung nach einem der Ansprüche 1 bis 5,
**dadurch gekennzeichnet,**
**dass** die zu reinigenden Oberflächen (1 bis 4) zusätzlich zu wenigstens einer Fahrzeugscheibe (11) zumindest eine zu reinigende Beleuchtungseinrichtung (12) und/oder ein zu reinigendes Element (13, 14) eines Fahrerassistenzsystems umfasst.

## Revendications

1. Dispositif de nettoyage (10) pour véhicules, comportant un réservoir (18) servant à stocker un fluide de nettoyage (5), comportant au moins une pompe d'alimentation (20) pour distribuer le fluide de nettoyage (5) à partir du réservoir (18), comportant une pluralité de dispositifs de pulvérisation (15) servant à appliquer le fluide de nettoyage (5) sur des surfaces (1 à 4) à nettoyer, et comportant des dispositifs de vannes (40) disposés dans des conduites d'alimentation (34 à 37) pour les dispositifs de pulvérisation (15) afin de réguler l'écoulement du fluide de nettoyage (5) vers les dispositifs de pulvérisation (15), un réservoir tampon (25) étant prévu pour le fluide de nettoyage (5) et relié hydrauliquement au côté haute pression de l'au moins une pompe d'alimentation (20), le fluide de nettoyage (5) étant stocké dans le réservoir tampon (25) sous pression hydraulique (P), et les conduites d'alimentation (34 à 37) pour les dispositifs de pulvérisation (15) partant du réservoir tampon (25)
**caractérisé en ce que**
le réservoir tampon (25) comporte une paroi extérieure (26) rigide, et **en ce qu'**un piston (30) guidé de manière mobile est disposé dans l'intérieur (28) du réservoir tampon (25), celui-ci définissant une chambre de stockage (32) pour le fluide de nettoyage (5) avec un côté avant du piston (30).

2. Dispositif de nettoyage selon la revendication 1,
**caractérisé en ce que**
un dispositif d'augmentation de pression (45) qui est séparé de l'au moins une pompe d'alimentation (20) est associé au réservoir tampon (25) et est configuré pour mettre le fluide de nettoyage (5) sous pression dans le réservoir tampon (25).

3. Dispositif de nettoyage selon la revendication 1 ou 2,
**caractérisé en ce que**
du côté orienté dans une direction s'éloignant de la chambre de stockage (32), le piston (30) est poussé dans la direction de la chambre de stockage (32) au moyen d'une pression hydraulique ou pneumatique ou au moyen d'une force élastique mécanique.

4. Dispositif de nettoyage selon l'une des revendications 1 à 3,
**caractérisé en ce que**
des moyens de mesure de pression (42) sont prévus pour effectuer au moins une mesure indirecte de la pression hydraulique (P) du fluide de nettoyage (5) dans le réservoir tampon (25), et **en ce que** l'au moins une pompe d'alimentation (20) est configurée de telle sorte que, lorsque la pression baisse jusqu'à une valeur inférieure à un minimum (Pₘᵢₙ), la pression (P) est élevée jusqu'à une valeur supérieure à la pression minimale (Pₘᵢₙ) en distribuant du fluide de nettoyage (5) au réservoir tampon (25) à partir du réservoir (18).

5. Dispositif de nettoyage selon l'une des revendications 1 à 4,
**caractérisé en ce que**
les dispositifs de vannes (40) sont configurés sous la forme de dispositifs de vannes à commande électromagnétique (40).

6. Dispositif de nettoyage selon l'une des revendications 1 à 5,
**caractérisé en ce que**
outre au moins un pare-brise de véhicule (11), les surfaces (1 à 4) à nettoyer comprennent au moins un système d'éclairage (12) à nettoyer et/ou un élément (13, 14) d'un système d'aide à la conduite à nettoyer.
